# FASCICULE DE BREVET EUROPEEN

(11) **EP 3 204 435 B1**
(45) Date de publication et mention de la délivrance du brevet: **04.12.2019**
(21) Numéro de dépôt: 15778369.7
(22) Date de dépôt: 21.09.2015
(51) Int. Cl.: C08F 214/22, C08J 5/18, C08F 2/00

(54) **PROCEDE DE PREPARATION DE TERPOLYMERES DU POLYFLUORURE DE VINYLIDENE**
VERFAHREN ZUR HERSTELLUNG VON VINYLIDENFLUORIDTERPOLYMEREN
PROCESS FOR THE PREPARATION OF VINYLIDENE FLUORIDE TERPOLYMERS

(30) Priorité: 06.10.2014 FR 1459543
(43) Date de publication de la demande: 16.08.2017
(73) Titulaire: Arkema France, 92700 Colombes (FR)
(72) Inventeur: DOMINGUES DOS SANTOS, Fabrice, 75003 Paris (FR); LANNUZEL, Thierry, 69100 Villeurbanne (FR)
(74) Mandataire: Albani, Dalila
(86) Numéro de dépôt international: PCT/FR2015/052523
(87) Numéro de publication internationale: WO 2016/055712

(56) Documents cités:
- WO-A1-2014/091130
- US-B1- 6 355 749

## Description

### DOMAINE DE L'INVENTION

La présente invention concerne un procédé de préparation de dérivés du polyfluorure de vinylidène (PVDF), et plus particulièrement de terpolymères préparés à partir de fluorure de vinylidène (VDF), de trifluoroéthylène (TrFE) et d'un tiers monomère.

### ARRIERE-PLAN TECHNIQUE

Les polymères fluorés représentent une classe de composés ayant des propriétés remarquables pour un grand nombre d'applications, depuis la peinture ou les revêtements spéciaux jusqu'aux joints d'étanchéité, en passant par l'optique, la microélectronique et la technologie membranaire. Parmi ces polymères fluorés, les copolymères sont particulièrement intéressants en raison de leur diversité, de leur morphologie, de leurs propriétés exceptionnelles et de leur versatilité.

En particulier, les polymères à base de VDF et de TrFE ont été proposés en tant que matériaux ferroélectriques qui génèrent un actionnement mécanique induit par un champ électrique externe. Ces polymères ont été reconnus pour des applications dans divers transducteurs, actionneurs et capteurs.

Il a également été découvert que l'utilisation d'un tiers monomère portant un substituant encombrant permettait de perturber la cristallisation des polymères ferroélectriques à base de VDF et de TrFE, de sorte à leur conférer des propriétés de matériaux relaxeurs avec des effets électrostrictifs importants.

Toutefois, l'introduction de ce tiers monomère se traduit généralement par une diminution de la température de fusion du polymère ainsi que par une diminution de sa résistance mécanique mesurée par le module d'Young, ce qui limite ses possibilités d'utilisation et constitue un frein à son usage.

Le document EP 0129244 décrit des terpolymères P(VDF-TrFE-HFP), où HFP désigne l'hexafluoropropylène, ainsi que leur fabrication. Plus particulièrement, selon le document, le monomère HFP est d'abord chargé dans un autoclave, puis un mélange gazeux de VDF et TrFE est ajouté. La réaction est initiée par l'ajout d'un initiateur de polymérisation radicalaire. Ensuite, ce mélange gazeux de VDF et TrFE est injecté en continu pour maintenir la pression constante au cours de la réaction.

Un procédé similaire est décrit dans WO 2014/091130. Dans la préparation d'un terpolymère de fluorure de vinylidène, de trifluoroéthylène et d'au moins un tiers de monomère plus réactif que le VDF, tel que le chlorotrifluoroéthylène, par polymérisation radicalaire seulement une partie des monomères mis à réagir est introduite dans le réacteur avant l'initiation de la polymérisation. La chute de pression qui s'observe au cours de la polymérisation est au moins partiellement compensée par injection d'un mélange de monomères.

Le document FR 2889193 décrit des terpolymères de VDF et TrFE avec un tiers monomère, notamment le CFE (1,1-chlorofluoroéthylène), ainsi que leur fabrication. Plus particulièrement, selon le document, un mélange gazeux de VDF, TrFE et CFE est chargé dans un autoclave, avec un initiateur de polymérisation. Puis un mélange des trois monomères est injecté en continu et à pression constante.

Le document WO 2009/147030 décrit des copolymères P(VDF-TrFE) ainsi que des terpolymères P(VDF-TrFE-CTFE), où CTFE désigne le chlorotrifluoroéthylène, ainsi que leur fabrication, qui est effectuée de manière similaire à ce qui a été décrit ci-dessus.

Le document EP 0391421 décrit également des terpolymères P(VDF-TrFE-CTFE) ainsi que leur fabrication. Le document enseigne à préparer les terpolymères d'une manière analogue à celle décrite ci-dessus. En outre, dans des exemples donnés à titre comparatif, on prévoit seulement un chargement initial en monomères, et la pression dans le réacteur diminue alors au cours de la réaction. Un terpolymère ayant un rapport molaire VDF/TrFE/CTFE de 65/29/6 et ayant une température de fusion de 135°C est obtenu avec cette méthode.

Le document US 4,554,335 décrit également des terpolymères P(VDF-TrFE-CTFE) ainsi que leur fabrication. Selon l'exemple fourni, cette fabrication est effectuée en chargeant un autoclave avec les trois monomères selon un rapport molaire VDF/TrFE/CTFE de 65/30/5, en chauffant pour initier la polymérisation, et en poursuivant la réaction pendant 3 heures avec une réduction de la pression. Le polymère obtenu présente une température de fusion de 140°C.

Le document WO 2010/116105 décrit un procédé de fabrication de terpolymères P(VDF-TrFE-CTFE) ou P(VDF-TrFE-CFE). Ce procédé propose un chargement initial de VDF et TrFE seulement dans un autoclave, une initiation de la réaction par injection d'initiateur, puis une injection en continu d'un mélange des trois monomères.

D'autres procédés de polymérisation dans l'état de la technique reposent sur des techniques spécifiques de chimie d'amorçage. Celles-ci sont très difficiles à mettre en œuvre sur le plan industriel.

C'est le cas par exemple de la technique décrite dans le document US 6,355,749 qui repose sur l'utilisation de molécules organoboranes.

Il existe donc un besoin de mettre au point des polymères à base de VDF et de TrFE présentant à la fois une température de fusion relativement élevée, une résistance mécanique relativement élevée, et simultanément des propriétés de matériaux relaxeurs avec des effets électrostrictifs importants.

### RESUME DE L'INVENTION

L'invention concerne en premier lieu un procédé de préparation d'un polymère à partir de monomères comprenant le fluorure de vinylidène, le trifluoroéthylène et un tiers monomère, le procédé comprenant successivement :
- l'injection dans un réacteur de la totalité des monomères mis à réagir ;
- l'initiation d'une polymérisation des monomères ;
- une étape (a) de poursuite de la polymérisation des monomères, au cours de laquelle on compense une chute de pression dans le réacteur, autrement dit on maintient la pression dans le réacteur à une valeur constante.

Selon un mode de réalisation, la compensation de la chute de pression à l'étape (a) est effectuée par injection d'un flux dans le réacteur, ce flux étant de préférence un flux d'eau.

Selon un mode de réalisation, au cours de l'étape (a), la pression dans le réacteur est maintenue constante et égale à une valeur de référence comprise entre 50 et 130 bars absolus, de préférence 70 et 110 bars absolus, de manière plus particulièrement préférée entre 80 et 100 bars absolus, et de manière encore plus préférée entre 85 et 95 bars absolus.

Selon un mode de réalisation, le procédé comprend, après l'étape (a) :
- une étape (b) de poursuite de la polymérisation des monomères, au cours de laquelle la température à l'intérieur du réacteur augmente.

Selon un mode de réalisation, la température à l'intérieur du réacteur au cours de l'étape (a) est inférieure ou égale à 55°C, de préférence inférieure ou égale à 52°C, et de manière plus particulièrement préférée inférieure ou égale à 50°C.

Selon un mode de réalisation, lequel la température à l'intérieur du réacteur augmente au cours de l'étape (b) jusqu'à une valeur supérieure ou égale à 50°C, et de manière plus particulièrement préférée supérieure ou égale à 52°C.

Selon un mode de réalisation, une proportion molaire d'au moins 60 % des monomères sont consommés au cours de l'étape (a), de préférence une proportion molaire d'au moins 70 % et plus particulièrement d'au moins 80 %.

Selon un mode de réalisation, le tiers monomère est choisi parmi le chlorotrifluoroéthylène et le 1,1-chlorofluoroéthylène, et de préférence est le chlorotrifluoroéthylène.

Selon un mode de réalisation, les proportions molaires relatives des monomères injectés dans le réacteur sont :
- de 50 à 80 % de fluorure de vinylidène, de préférence de 60 à 70 % ;
- de 15 à 40 % de trifluoroéthylène, de préférence de 25 à 35 % ; et
- de 1 à 15 % de tiers monomère, de préférence de 2 à 10 %.

L'invention concerne également un polymère susceptible d'être obtenu selon le procédé décrit ci-dessus.

Ce polymère présente une température de fusion supérieure ou égale à 145°C.

La présente invention permet de surmonter les inconvénients de l'état de la technique. Elle fournit plus particulièrement des polymères à base de VDF et de TrFE présentant à la fois une température de fusion relativement élevée, une résistance mécanique relativement élevée, et simultanément des propriétés de matériaux relaxeurs avec des effets électrostrictifs importants.

Cela est accompli grâce à un procédé de polymérisation dans lequel la totalité des monomères sont mis à réagir initialement dans le réacteur, et dans lequel on procède à une compensation de la chute de pression survenant dans le réacteur du fait de la réaction de polymérisation.

Le VDF et le TrFE ont des réactivités voisines. Par conséquent, il n'y a pas de dérive significative de composition au cours de la polymérisation de ces deux monomères à partir d'un mélange donné. En revanche, si l'on utilise un tiers monomère, celui-ci présente en général une réactivité différente. Par conséquent, à partir d'un mélange initial de VDF, TrFE et tiers monomère, la teneur en tiers monomère a tendance à augmenter ou à diminuer en cours de polymérisation selon les cas. Cette dérive conduit en général à la formation d'un polymère hétérogène.

Afin de corriger cette dérive et pour d'autres raisons pratiques liées à la conduite de procédé, on recourt en général à une injection continue d'un mélange de monomères au cours de la réaction.

Toutefois, les inventeurs ont constaté que cela a pour conséquence d'altérer les propriétés cristallines du matériau produit, qui est ainsi moins résistant mécaniquement et qui a tendance à fondre à une température inférieure.

Les inventeurs ont par ailleurs découvert que, en mettant en présence la totalité des monomères devant réagir, puis en compensant volontairement la chute de pression dans le réacteur au cours de la polymérisation, on obtient un polymère présentant à la fois un point de fusion élevé, un module d'élasticité élevé, et des propriétés diélectriques et notamment électrostrictives remarquables.

Par ailleurs, on s'affranchit ainsi de l'étape d'injection en continu d'un mélange de monomères pendant la polymérisation, qui est délicate à mettre en œuvre en pratique.

### DESCRIPTION DE MODES DE REALISATION DE L'INVENTION

L'invention est maintenant décrite plus en détail et de façon non limitative dans la description qui suit.

Le procédé de l'invention permet de préparer un polymère à partir de monomères comprenant le VDF, le TrFE et un tiers monomère noté X. De préférence, les monomères utilisés consistent en le VDF, le TrFE et un unique monomère X, auquel cas on obtient un terpolymère P(VDF-TrFE-X). Toutefois, alternativement, il est possible d'utiliser encore d'autres monomères supplémentaires.

Le tiers monomère peut notamment être choisi parmi les alcènes halogénés, notamment les propènes ou éthylènes halogénés, et par exemple parmi les tétrafluoropropènes (notamment le 2,3,3,3-tétrafluoropropène), les chlorotrifluoropropènes (notamment le 2-chloro-3,3,3-trifluoropropène), le 1-chloro-2-fluoroéthylène, les trifluoropropènes (notamment le 3,3,3-trifluoropropène), les pentafluoropropènes (notamment le 1,1,3,3,3-pentafluoropropène ou le 1,2,3,3,3-pentafluoropropène), le 1-chloro-2,2-difluoroethylène, le 1-bromo-2,2-difluoroethylène, le bromotrifluoroéthylène, le fluoroéthylène (ou fluorure de vinyle), le tétrafluoroéthylène et l'hexafluoropropène.

Le tiers monomère peut également être un perfluoroalkylvinyléther, de formule générale R_{f}-O-CF-CF₂, Rf étant un groupement alkyle, de préférence en C1 à C4. Des exemples préférés sont le PPVE (perfluoropropylvinyléther) et le PMVE (perfluorométhylvinyléther).

Toutefois, de manière particulièrement préférée, le tiers monomère est le CFE (1,1-chlorofluoroéthylène) ou le CTFE (chlorotrifluoroéthylène), et tout particulièrement le CTFE.

Dans la suite, on se réfère au CTFE uniquement, mais il est possible de lire la description qui suit en remplaçant le CTFE par un autre monomère.

Le procédé selon l'invention peut être un procédé de polymérisation en suspension, en solution ou en émulsion. De préférence, il s'agit d'un procédé de polymérisation en suspension, qui de manière plus particulièrement préférée est effectué dans l'eau.

L'invention prévoit l'injection de la totalité des monomères mis à réagir initialement dans un réacteur, avant le début de la réaction. Autrement dit, on n'effectue pas d'injection de monomères en cours de polymérisation.

Puis la réaction de polymérisation est initiée. Cette réaction de polymérisation comporte de préférence deux étapes :
- une étape (a) au cours de laquelle on compense une chute de pression dans le réacteur ;
- une étape (b) au cours de laquelle on procède à une augmentation de température (sans nécessairement contrôler la pression).

L'étape (b) est toutefois facultative.

Par « *compenser une chute de pression dans le réacteur* », on entend prendre une ou des mesures actives visant à maintenir la pression dans le réacteur au-dessus du niveau qu'elle aurait en l'absence de ces mesures. Ainsi, au cours de l'étape (a), la pression dans le réacteur (pression du milieu réactionnel) est ajustée volontairement.

Par exemple, on peut envisager d'utiliser un réacteur à volume variable, dont le volume est réduit (de préférence de manière continue) au cours de l'étape (a).

Alternativement, et plus simplement, on procède à l'injection d'un flux dans le réacteur au cours de l'étape (a), de préférence de manière continue, de sorte à compenser l'élimination des monomères qui polymérisent. La composition du flux est choisie de sorte à ne pas interférer avec la réaction de polymérisation.

On peut ainsi injecter un flux d'eau dans le réacteur, ou un flux de tout autre liquide non miscible avec les monomères et inerte vis-à-vis de la polymérisation.

La chute de pression dans le réacteur est de préférence compensée totalement. Alternativement, elle est compensée partiellement, auquel cas on observe tout de même une certaine diminution de la pression dans le réacteur au cours de l'étape (a).

Au cours de l'étape (a), la pression dans le réacteur peut être maintenue au-dessus d'une valeur seuil. Cette valeur seuil peut en particulier être de 60, 65, 70, 75, 80, 85 ou 90 bars absolus. A faible pression, la vitesse de polymérisation est ralentie à des niveaux inacceptables du point de vue de la productivité.

La pression dans le réacteur est maintenue à une valeur constante au cours de l'étape (a).

La pression peut être maintenue entre 60% et 140 % de la pression initiale, de préférence entre 80% et 120%, et de manière plus préférée entre 90% et 110% de la pression initiale. A titre d'exemple, la pression peut être maintenue dans une gamme de 80 à 120 bars absolus.

La pression dans le réacteur peut également être maintenue sensiblement égale à une valeur de pression de référence, c'est-à-dire être maintenue dans une gamme de ± 30 % par rapport à la valeur de pression de référence, ou de ± 20 % par rapport à la valeur de pression de référence , ou de ± 10 % par rapport à la valeur de pression de référence, ou encore de ± 5 % par rapport à la valeur de pression de référence.

De préférence, le taux de conversion à l'issue de l'étape (a), c'est-à-dire la proportion molaire de monomères consommés par la réaction de polymérisation, est supérieure ou égale à 60 %, et de préférence supérieure ou égale à 65 % ou à 70 % ou à 75 % ou à 80 %.

La compensation de la chute de pression au cours de l'étape (a) permet d'éviter le fort ralentissement de la cinétique de réaction qui est observé en l'absence d'une telle compensation, et qui conduit à une importante limitation du taux de conversion, ou à des durées de polymérisation incompatibles avec les exigences industrielles de productivité et de capacité.

Au cours de l'étape (a), on maintient par ailleurs de préférence la température au sein du réacteur (température du milieu réactionnel) inférieure ou égale à 55°C, de préférence inférieure ou égale à 52°C, et de manière plus particulièrement préférée inférieure ou égale à 50°C. La température est en outre de préférence supérieure ou égale à 35°C, ou à 40°C ou à 45°C. Une température de 45 à 50°C, et par exemple de 48°C environ, peut notamment être utilisée. Sans vouloir être liés par une théorie, les inventeurs estiment que cette gamme de température permet d'obtenir de meilleures propriétés de cristallinité et de température de fusion.

Afin de contrôler la température du milieu réactionnel, on munit le réacteur de moyens d'ajustement de la température (par exemple avec une double enveloppe dans laquelle circule un fluide caloporteur).

Au cours de l'étape (b), il est avantageux, afin de maximiser le taux de conversion et la consommation des monomères et également afin de réduire la quantité résiduelle d'initiateur non décomposé en fin de réaction (la présence résiduelle de l'initiateur n'étant pas favorable du point de vue des caractéristiques de pureté et de stabilité thermique du produit), de procéder à une augmentation de la température, de préférence jusqu'à une valeur supérieure ou égale à 50°C, ou à 52°C. Par exemple, la température peut être augmentée jusqu'à 54°C environ.

A l'issue de l'étape (b), le taux de conversion est de préférence supérieur ou égal à 80%, plus particulièrement supérieur ou égal à 85%, et idéalement de 90 à 95%

Au cours de l'étape (b), on peut soit continuer à contrôler la pression, soit cesser de le faire. Dans ce cas, au cours de l'étape (b), en général la pression diminue dans le réacteur, la polymérisation se poursuivant.

Au cours de l'étape (b), la pression dans le réacteur diminue jusqu'à atteindre de préférence une pression inférieure à 70 bars absolus, ou inférieure à 60 bars absolus, ou inférieure à 50 bars absolus, ou inférieure à 40 bars absolus.

Une fois que la pression dans le réacteur s'est stabilisée, on peut vidanger le réacteur. Le produit recueilli peut être filtré, lavé et séché de manière connue en soi.

L'étape (b) doit de préférence conduire à la production d'une proportion relativement faible de polymère, afin d'éviter d'altérer ses performances.

Généralement, le rapport molaire VDF/TrFE des monomères mis en présence dans le réacteur est de 55:45 à 75:25 et de manière davantage préférée de 62:38 à 72:28.

Selon certains modes de réalisation, ce rapport molaire VDF/TrFE est de 55:45 à 56:44 ou de 56:44 à 57:43 ou de 57:43 à 58:42 ou de 58:42 à 59:41 ou de 59:41 à 60:40 ou de 60:40 à 61:39 ou de 61:39 à 62:38 ou de 62:38 à 63:37 ou de 63:37 à 64:36 ou de 64:36 à 65:35 ou de 65:35 à 66:34 ou de 66:34 à 67:33 ou de 67:33 à 68:32 ou de 68:32 à 69:31 ou de 69:31 à 70:30 ou de 70:30 à 71:29 ou de 71:29 à 72:28 ou de 72:28 à 73:27 ou de 73:27 à 74:24 ou de 74:24 à 75:25.

Généralement, la proportion molaire des monomères de CTFE par rapport à la quantité totale de monomères de départ est de 1 à 15 %. Des plages préférées sont de 1 à 10 %, de préférence de 2 % à 8 % et de manière davantage préférée de 3 % à 5 %.

Selon certains modes de réalisation, cette proportion molaire de CTFE est de 1 à 1,5 % ou de 1,5 à 2 % ou de 2 à 2,5 % ou de 2,5 à 3 % ou de 3 à 3,5 % ou de 3,5 à 4 % ou de 4 à 4,5 % ou de 4,5 à 5 % ou de 5 à 5,5 % ou de 5,5 à 6 % ou de 6 à 6,5 % ou de 6,5 à 7 % ou de 7 à 7,5 % ou de 7,5 à 8 % ou de 8 à 8,5 % ou de 8,5 à 9 % ou de 9 à 9,5 % ou de 9,5 à 10 %.

L'initiation de la réaction peut être obtenue en ajoutant un initiateur de polymérisation radicalaire, qui peut notamment être un peroxyde organique tel qu'un peroxydicarbonate. Il est généralement utilisé en une quantité de 0,1 à 10 g par kilogramme du chargement total de monomères. De préférence, la quantité utilisée est de 0,5 à 5 g/kg.

Généralement, l'initiation de la réaction en tant que telle est effectuée par l'action combinée d'un ajout de l'initiateur de polymérisation et d'une montée en température, qui s'accompagne d'une montée en pression (l'initiateur peut être ajouté dans le réacteur après les monomères ou avant les monomères).

Par ailleurs, il est avantageux d'ajouter un agent régulateur de longueur de chaîne dans le milieu réactionnel. On peut notamment utiliser de l'acétate d'éthyle, ou du carbonate de diéthyle, ou un alcool comme l'isopropanol par exemple, dans une quantité de 5 à 100 g par kilogramme du chargement total de monomères. De préférence, la quantité utilisée est de 10 à 40 g/kg.

Par ailleurs, il est avantageux d'ajouter un agent de suspension dans le milieu réactionnel. On peut notamment utiliser un dérivé de cellulose, en particulier un éther de cellulose tel que la methylcellulose, l'ethylhydroxyethylcellulose, ou l'hydroxypropylméthylcellulose, dans une quantité de 0,1 à 5 g par kilogramme du chargement total de monomères. De préférence, la quantité utilisée est de 0,3 à 1,5 g/kg.

Selon un mode de réalisation, l'agent régulateur de chaîne, l'initiateur de polymérisation et l'agent de suspension sont introduits dans le réacteur avant que les monomères ne soient introduits.

Le milieu réactionnel est de préférence agité au cours de la réaction de polymérisation.

Dans le polymère obtenu selon le procédé de l'invention, le rapport molaire VDF/TrFE des unités structurales du polymère est de 55:45 à 75:25 et de manière davantage préférée de 62:38 à 72:28.

Selon certains modes de réalisation, ce rapport molaire VDF/TrFE est de 55:45 à 56:44 ou de 56:44 à 57:43 ou de 57:43 à 58:42 ou de 58:42 à 59:41 ou de 59:41 à 60:40 ou de 60:40 à 61:39 ou de 61:39 à 62:38 ou de 62:38 à 63:37 ou de 63:37 à 64:36 ou de 64:36 à 65:35 ou de 65:35 à 66:34 ou de 66:34 à 67:33 ou de 67:33 à 68:32 ou de 68:32 à 69:31 ou de 69:31 à 70:30 ou de 70:30 à 71:29 ou de 71:29 à 72:28 ou de 72:28 à 73:27 ou de 73:27 à 74:24 ou de 74:24 à 75:25.

Généralement, la proportion molaire des unités structurales de CTFE par rapport aux unités structurales totales du polymère est de 1 à 15 %. Des plages préférées sont de 1 à 10 %, de préférence de 2 % à 8 % et de manière davantage préférée de 3 % à 5 %.

Selon certains modes de réalisation, cette proportion molaire de CTFE est de 1 à 1,5 % ou de 1,5 à 2 % ou de 2 à 2,5 % ou de 2,5 à 3 % ou de 3 à 3,5 % ou de 3,5 à 4 % ou de 4 à 4,5 % ou de 4,5 à 5 % ou de 5 à 5,5 % ou de 5,5 à 6 % ou de 6 à 6,5 % ou de 6,5 à 7 % ou de 7 à 7,5 % ou de 7,5 à 8 % ou de 8 à 8,5 % ou de 8,5 à 9 % ou de 9 à 9,5 % ou de 9,5 à 10 %.

Le rapport molaire VDF/TrFE dans le polymère peut être déterminé par RMN du proton. Le polymère est dissous dans un solvant deutéré approprié et le spectre RMN est enregistré sur un spectromètre RMN-FT équipé d'une sonde multi-nucléaire. Le noyau hydrogène de l'unité TrFE (CHF=CF₂) donne un signal distinctif à environ 5 ppm, tandis que les 2 atomes d'hydrogène du groupe CH₂ des unités VDF donnent un massif centré à 3 ppm. L'intégration relative des deux signaux donne l'abondance relative des deux monomères, c'est-à-dire leur rapport molaire.

La quantité de CTFE peut être déterminée par une mesure de la teneur en chlore par analyse élémentaire. La combinaison des deux résultats rend possible de calculer la composition molaire du terpolymère.

La masse molaire moyenne en poids Mw du polymère est de préférence d'au moins 100 000, de préférence d'au moins 200 000 et de manière davantage préférée d'au moins 300 000 ou d'au moins 400 000. Elle peut être ajustée par modification de certains paramètres du procédé, tels que la température dans le réacteur, ou par ajout d'un agent de transfert.

La distribution de poids moléculaire peut être estimée par SEC (chromatographie d'exclusion stérique) avec du diméthylformamide (DMF) en tant qu'éluant, avec un ensemble de 3 colonnes de porosité croissante. La phase stationnaire est un gel de styrène-DVB. Le procédé de détection est fondé sur une mesure de l'indice de réfraction, et l'étalonnage est réalisé avec des étalons de polystyrène. L'échantillon est mis en solution à 0,5 g/L dans du DMF et filtré sur un filtre en nylon de 0,45 µm.

Le poids moléculaire peut également être évalué par mesure de l'indice de fluidité à 230 °C sous une charge de 5 kg selon ASTM D1238 (ISO 1133).

Par ailleurs, le poids moléculaire peut également être caractérisé par une mesure de la viscosité en solution selon ISO 1628. La méthyléthylcétone (MEK) est un solvant préféré des terpolymères pour la détermination de l'indice de viscosité.

Les polymères obtenus présentent avantageusement une température de fusion supérieure ou égale à 130°C ; ou supérieure ou égale à 135°C ; ou supérieure ou égale à 140°C ; ou supérieure ou égale à 145°C ; ou supérieure ou égale à 150°C.

La température de fusion est mesurée par calorimétrie différentielle à balayage (DSC) sur un échantillon de polymère de 5 à 20 mg. Cette technique consiste à mesurer les différences des échanges de chaleur entre l'échantillon à analyser et une référence. Elle permet de déterminer les transitions de phase, dont notamment la température de fusion, et les enthalpies correspondant à ces phénomènes. Pour les terpolymères de l'invention, la gamme de température balayée est de -20 °C à 200 °C, à une vitesse de 10°C par minute. On réalise au moins 2 cycles (2 chauffages et 2 refroidissements). La température de fusion est par convention la valeur au maximum du pic de fusion, et l'enthalpie de fusion, proportionnelle au taux de cristallinité de l'échantillon, est déterminée selon la norme ASTM E537-02.

Des films peuvent être préparés en utilisant le terpolymère de l'invention, par exemple par coulage en solvant ou extrusion ou compression par fusion à chaud, et recuit ultérieur (c.-à-d. chauffage par exemple pendant plusieurs heures à une température de 100 à 120 °C, et refroidissement).

Par exemple, une poudre polymère peut être dissoute dans du DMF à une concentration de 3 %, puis filtrée avec un filtre de 1 µm. La solution peut être versée sur une lame en verre propre sur une plaque chauffante réglée à 60 °C. Après séchage pendant environ 5 heures, le film peut être décollé et séché dans un four sous vide à 100 °C pendant la nuit. Le film séché peut être étiré dans une direction à un taux d'étirement d'environ 5 à 7. Le film étiré peut être recuit dans un four à air forcé à 80 °C pendant 5 heures, puis à une température comprise entre 105 °C et 120 °C pendant 3 heures.

L'invention rend possible d'obtenir des films minces ayant une épaisseur aussi mince que 1 à 5 µm, et de préférence 1 à 3 µm. Si nécessaire, des films ayant une épaisseur intermédiaire de 15 à 25 µm sont tout d'abord préparés, puis sont étirés d'un facteur de 2 à 10, de préférence de 5 à 7 (p. ex. tel que décrit précédemment) pour obtenir l'épaisseur finale souhaitée.

Les films de l'invention sont en plus caractérisés par une constante diélectrique à 1 kHz et à 25 °C qui est inférieure à 40, et de manière davantage préférée inférieure à 30 ou inférieure à 20 et par une température de fusion du polymère supérieure ou égale à 145°C.

Afin de mesurer les caractéristiques diélectriques du film polymère, le film est métallisé par pulvérisation d'électrodes en or de 30 nm d'épaisseur sur les deux surfaces d'un diamètre de 12 mm. L'éprouvette de film métallisée est maintenue entre deux connecteurs métalliques en argent dans un four Delta Design. Un analyseur d'impédance QuadTech 7600 Plus est utilisé pour mesurer la capacité, le facteur de dissipation et la constante diélectrique en fonction de la température et de la fréquence.

Les films de l'invention sont également de préférence caractérisés par un module élastique d'au moins 0,5 GPa, et de manière davantage préférée d'au moins 0,6 GPa ou d'au moins 0,7 GPa ou d'au moins 0,8 GPa ou d'au moins 0,9 GPa ou d'au moins 1 GPa ou d'au moins 1,1 GPa ou d'au moins 1,2 GPa ou d'au moins 1,3 GPa ou d'au moins 1,4 GPa.

La mesure du module élastique est réalisée selon ASTM D1708. Des éprouvettes sont découpées avec un emporte-pièce en forme d'os, d'une largeur de 5 mm et d'une longueur de 22 mm. Un appareil Instron de modèle 5866 est utilisé pour mesurer le module. Une cellule de charge de 100 N est utilisée avec une vitesse de traverse de 25,4 mm/min. La température d'essai est de 23 °C. Le module sécant à une déformation de 1 % est utilisé.

Ces films sont également de préférence caractérisés par une déformation électrostrictive à 25 °C d'au moins 0,25 %, de préférence d'au moins 0,4 %, de manière davantage préférée d'au moins 1 % ou d'au moins 1,5 %, sous un gradient de champ électrique de 50 MV/m. En variante, ils peuvent être caractérisés par une déformation électrostrictive à 25 °C d'au moins 0,7 %, de préférence d'au moins 1 %, de manière davantage préférée d'au moins 1,5 % ou d'au moins 2 % ou d'au moins 2,5 % ou d'au moins 3 %, sous un gradient de champ électrique de 100 MV/m. Selon certains autres modes de réalisation, la déformation électrostrictive sous un gradient de champ électrique de 100 MV/m est inférieure à 3 %, par exemple inférieure à 2,5 % ou inférieure à 2 %.

Afin de mesurer la déformation électrostrictive sous le champ appliqué, l'éprouvette de déformation est métallisée des deux côtés avec une électrode en or de 25 mm x 13 mm. La direction de 13 mm est parallèle à la direction d'étirement. Des fils métalliques minces sont collés sur la zone métallisée avec de l'époxy argent. Une petite tension est appliquée sur l'éprouvette métallisée de l'ordre de 10 à 20 g (le long de la direction d'étirement), et un champ électrique est appliqué à l'éprouvette. Le changement de dimension de l'éprouvette dans la direction d'étirement est suivi par une caméra CCD Computar qui est connectée à un ordinateur en utilisant le programme LabView. La déformation est définie par le changement de longueur de l'éprouvette/la longueur initiale de l'éprouvette.

Les polymères obtenus selon l'invention peuvent être notamment utilisés dans la fabrication d'actionneurs (en haptique, en microfluidique, dans des cathéters orientables, dans des claviers braille...), de dispositifs acoustiques (hauts parleurs ou tweeters), de transistors organiques à films fins (OTFT), ces polymères pouvant alors fournir le matériau diélectrique de la grille.

### EXEMPLE

Les exemples suivants illustrent l'invention sans la limiter.

### Exemple 1

Un réacteur de 3 L agité contenant de l'eau déminéralisée et 0,5 g d'hydroxypropylméthylcellulose est soigneusement désaéré puis refroidi à 15°C.

18 g d'acétate d'éthyle (agent régulateur de la longueur de chaine) et 2,7 g de peroxydicarbonate de n-propyle (initiateur) sont introduits dans le réacteur. Puis on injecte des monomères VDF, TrFE et CTFE en proportion molaire 65/31/4, en quantité telle que la pression autogène du réacteur soit de 90 bars quand la température interne du réacteur atteint 48°C.

La réaction démarre, et la chute de pression est compensée par injection d'eau sous pression. Quand 521 g d'eau ont été introduits, l'injection est stoppée et on laisse chuter la pression tout en augmentant progressivement la température jusqu'à 54°C.

Quand la pression est stable dans le réacteur, celui-ci est refroidi et le contenu du réacteur est vidangé. Le gâteau recueilli est filtré puis lavé plusieurs fois à l'eau déminéralisée, et enfin séché en étuve à 60°C jusqu'à poids constant.

Le polymère obtenu est analysé en composition par combinaison des RMN 1H et 19F et caractérisé thermiquement par calorimétrie différentielle à balayage (DSC). La composition trouvée est 62,5/32,8/4,7 en VDF/TrFE/CTFE respectivement. La température de fusion est mesurée à 149,3°C avec une enthalpie de fusion de 20 J/g. Un film fabriqué avec ce polymère possède un module élastique supérieur à 700 MPa. Il présente en outre un caractère relaxeur avec une fine hystérésis.

### Exemple 2 (comparatif)

Dans un réacteur de 3 L soigneusement desoxygéné contenant de l'eau déminéralisée et 0,4 g d'hydroxypropylméthylcellulose et refroidi à 15°C, on introduit une charge initiale de VDF et de TrFE de composition 65/35 en proportions molaires.

Le réacteur est alors chauffé à la température initiale de polymérisation de 46°C. La pression dans le réacteur atteint 80 bars. 2,5 g d'initiateur en solution dans 10 g d'acétate d'éthyle sont alors injectés dans le réacteur afin de démarrer la réaction.

La consommation des monomères liée à la polymérisation est compensée par l'injection d'un mélange des 3 monomères VDF, TrFE et CTFE en proportions respectives 60,4/32,3/7,4, et en maintenant la pression dans le réacteur constante et voisine de 90 bars.

Quand 396 g de mélange ont été injectés, la réaction est stoppée par refroidissement rapide du réacteur, et son contenu est vidangé. La composition molaire du polymère obtenu est mesurée par RMN comme étant 61,4/33,9/4,7 et sa température de fusion est trouvée égale à 138,9°C pour une enthalpie de 18.8 J/g.

## Revendications

1. Procédé de préparation d'un polymère à partir de monomères comprenant le fluorure de vinylidène, le trifluoroéthylène et un tiers monomère, le procédé comprenant successivement :
- l'injection dans un réacteur de la totalité des monomères mis à réagir ;
- l'initiation d'une polymérisation des monomères ;
- une étape (a) de poursuite de la polymérisation des monomères, au cours de laquelle on maintient constante la pression dans le réacteur.

2. Procédé selon la revendication 1, dans lequel la pression est maintenue constante au cours de l'étape (a) par injection d'un flux dans le réacteur, ce flux étant de préférence un flux d'eau.

3. Procédé selon la revendication 1 ou 2, dans lequel, au cours de l'étape (a), la pression dans le réacteur est maintenue constante égale à une valeur de référence comprise entre 50 et 130 bars absolus, de préférence 70 et 110 bars absolus, de manière plus particulièrement préférée entre 80 et 100 bars absolus, et de manière encore plus préférée entre 85 et 95 bars absolus.

4. Procédé selon l'une des revendications 1 à 3, comprenant, après l'étape (a) :
- une étape (b) de poursuite de la polymérisation des monomères, au cours de laquelle la température à l'intérieur du réacteur augmente.

5. Procédé selon l'une des revendications 1 à 4, dans lequel la température à l'intérieur du réacteur au cours de l'étape (a) est inférieure ou égale à 55°C, de préférence inférieure ou égale à 52°C, et de manière plus particulièrement préférée inférieure ou égale à 50°C.

6. Procédé selon l'une des revendications 1 à 5, dans lequel la température à l'intérieur du réacteur augmente au cours de l'étape (b) jusqu'à une valeur supérieure ou égale à 50°C, et de manière plus particulièrement préférée supérieure ou égale à 52°C.

7. Procédé selon l'une des revendications 1 à 6, dans lequel une proportion molaire d'au moins 60 % des monomères sont consommés au cours de l'étape (a), de préférence une proportion molaire d'au moins 70 % et plus particulièrement d'au moins 80 %.

8. Procédé selon l'une des revendications 1 à 7, dans lequel le tiers monomère est choisi parmi les alcènes halogénés, notamment les propènes ou éthylènes halogénés tels que les tétrafluoropropènes, notamment le 2,3,3,3-tétrafluoropropène, les chlorotrifluoropropènes, notamment le 2-chloro-3,3,3-trifluoropropène, le 1-chloro-2-fluoroéthylène, les trifluoropropènes, notamment le 3,3,3-trifluoropropène, les pentafluoropropènes, notamment le 1,1,3,3,3-pentafluoropropène ou le 1,2,3,3,3-pentafluoropropène, le 1-chloro-2,2-difluoroethylène, le 1-bromo-2,2-difluoroethylène, le bromotrifluoroéthylène, le fluoroéthylène, le tétrafluoroéthylène et l'hexafluoropropène.

9. Procédé selon l'une des revendications 1 à 7, dans lequel le tiers monomère est un perfluoroalkylvinyléther tel que le PPVE (perfluoropropylvinyléther) et le PMVE (perfluorométhylvinyléther).

10. Procédé selon l'une des revendications 1 à 7, dans lequel le tiers monomère est choisi parmi le chlorotrifluoroéthylène et le 1,1-chlorofluoroéthylène, et de préférence est le chlorotrifluoroéthylène.

11. Procédé selon l'une des revendications 1 à 10, dans lequel les proportions molaires relatives des monomères injectés dans le réacteur sont :
- de 50 à 80 % de fluorure de vinylidène, de préférence de 60 à 70 % ;
- de 15 à 40 % de trifluoroéthylène, de préférence de 25 à 35 % ; et
- de 1 à 15 % de tiers monomère, de préférence de 2 à 10 %.

12. Polymère susceptible d'être obtenu selon le procédé de l'une des revendications 1 à 11, ledit polymère présentant une température de fusion supérieure ou égale à 145°C.

13. Film comprenant le polymère susceptible d'être obtenu selon le procédé de l'une des revendications 1 à 11, ledit polymère présentant une température de fusion supérieure ou égale à 145°C, ledit film ayant une épaisseur de 1 à 5 µm et une constante diélectrique inférieure à 40, de préférence inférieure à 30, avantageusement inférieure à 20 à 1 kHz et 25°C.

## Patentansprüche

1. Verfahren zur Herstellung eines Polymers aus Monomeren, die Vinylidenfluorid, Trifluorethylen und ein drittes Monomer umfassen, wobei das Verfahren aufeinanderfolgend Folgendes umfasst:
- Einleiten aller umzusetzenden Monomere in den Reaktor;
- Initiierung einer Polymerisation der Monomere;
- einen Schritt (a) der Weiterführung der Polymerisation der Monomere, in dessen Verlauf der Druck im Reaktor konstant gehalten wird.

2. Verfahren nach Anspruch 1, bei dem der Druck im Verlauf von Schritt (a) durch Einleiten eines Stroms in den Reaktor konstant gehalten wird, wobei es sich bei diesem Strom vorzugsweise einen Strom von Wasser handelt.

3. Verfahren nach Anspruch 1 oder 2, bei dem im letzten Schritt (a) der Druck im Reaktor gleich einem Referenzwert zwischen 50 und 130 bar absolut, vorzugsweise 70 und 110 bar absolut, weiter bevorzugt zwischen 80 und 100 bar absolut und noch weiter bevorzugt zwischen 85 und 95 bar absolut gehalten wird.

4. Verfahren nach einem der Ansprüche 1 bis 3, umfassend nach Schritt (a):
- einen Schritt (b) der Weiterführung der Polymerisation der Monomere, in dessen Verlauf die Temperatur im Inneren des Reaktors ansteigt.

5. Verfahren nach einem der Ansprüche 1 bis 4, bei dem die Temperatur im Inneren des Reaktors im Verlauf von Schritt (a) kleiner oder gleich 55 °C, vorzugsweise kleiner oder gleich 52 °C und noch weiter bevorzugt kleiner oder gleich 50 °C ist.

6. Verfahren nach einem der Ansprüche 1 bis 5, bei dem die Temperatur im Inneren des Reaktors im Verlauf von Schritt (b) bis zu einem Wert größer oder gleich 50 °C und weiter bevorzugt größer oder gleich 52 °C ansteigt.

7. Verfahren nach einem der Ansprüche 1 bis 6, bei dem ein molarer Anteil von mindestens 60 % der Monomere im Verlauf von Schritt (a), vorzugsweise ein molarer Anteil von 70 % und spezieller von mindestens 80 % verbraucht wird.

8. Verfahren nach einem der Ansprüche 1 bis 7, bei dem das dritte Monomer aus halogenierten Alkenen, insbesondere halogenierten Propenen oder Ethylenen wie Tetrafluorpropenen, insbesondere 2,3,3,3-Tetrafluorpropen, Chlortrifluorpropenen, insbesondere 2-Chlor-3,3,3-trifluorpropen, 1-Chlor-2-fluorethylen, Trifluorpropenen, insbesondere 3,3,3-Trifluorpropen, Pentafluorpropenen, insbesondere 1,1,3,3,3-Pentafluorpropen oder 1,2,3,3,3-Pentafluorpropen, 1-Chlor-2,2-difluorethylen, 1-Brom-2,2-difluorethylen, Bromtrifluorethylen, Fluorethylen, Tetrafluorethylen und Hexafluorpropen ausgewählt wird.

9. Verfahren nach einem der Ansprüche 1 bis 7, bei dem es sich bei dem dritten Monomer um einen Perfluoralkylvinylether wie PPVE (Perfluorpropylvinylether) und PMVE (Perfluormethylvinylether) handelt.

10. Verfahren nach einem der Ansprüche 1 bis 7, bei dem das dritte Monomer aus Chlortrifluorethylen und 1,1-Chlorfluorethylen ausgewählt wird und vorzugsweise Chlortrifluorethylen ist.

11. Verfahren nach einem der Ansprüche 1 bis 10, bei dem die relativen molaren Anteile der in den Reaktor eingeleiteten Monomere
- 50 bis 80 % Vinylidenfluorid, vorzugsweise 60 bis 70 %,
- 15 bis 40 % Trifluorethylen, vorzugsweise 25 bis 35 %, und
- 1 bis 15 % drittes Monomer, vorzugsweise 2 bis 10 %,
betragen.

12. Polymer, das gemäß dem Verfahren nach einem der Ansprüche 1 bis 11 erhältlich ist, wobei das Polymer einen Schmelzpunkt größer oder gleich 145 °C aufweist.

13. Folie, umfassend das Polymer, das gemäß dem Verfahren nach einem der Ansprüche 1 bis 11 erhältlich ist, wobei das Polymer einen Schmelzpunkt größer oder gleich 145 °C aufweist, wobei die Folie eine Dicke von 1 bis 5 µm und eine Dielektrizitätskonstante bei 1 kHz und 25 °C von weniger als 40, vorzugsweise weniger als 30, vorteilhafterweise weniger als 20, aufweist.

## Claims

1. Method for preparing a polymer starting from monomers comprising vinylidene fluoride, trifluoroethylene and a third monomer, the method comprising, successively:
- injecting all the monomers to be reacted into a reactor;
- initiating polymerization of the monomers;
- a step (a) of continuing the polymerization of the monomers, during which the pressure in the reactor is kept constant.

2. Method according to Claim 1, wherein the pressure is kept constant during step (a) by injecting a stream into the reactor, this stream preferably being a stream of water.

3. Method according to Claim 1 or 2, wherein, during step (a), the pressure in the reactor is kept constant equal to a reference value of between 50 and 130 bar absolute, preferably 70 and 110 bar absolute, more particularly preferably between 80 and 100 bar absolute, and even more preferably between 85 and 95 bar absolute.

4. Method according to one of Claims 1 to 3, comprising, after step (a):
- a step (b) of continuing the polymerization of the monomers, during which the temperature inside the reactor increases.

5. Method according to one of Claims 1 to 4, wherein the temperature inside the reactor during step (a) is less than or equal to 55°C, preferably less than or equal to 52°C, and more particularly preferably less than or equal to 50°C.

6. Method according to one of Claims 1 to 5, wherein the temperature inside the reactor increases during step (b) up to a value of greater than or equal to 50°C, and more particularly preferably greater than or equal to 52°C.

7. Method according to one of Claims 1 to 6, wherein a molar proportion of at least 60% of the monomers are consumed during step (a), preferably a molar proportion of at least 70% and more particularly of at least 80%.

8. Method according to one of Claims 1 to 7, wherein the third monomer is chosen from haloalkenes, especially halogenated propenes or ethylenes such as tetrafluoropropenes, especially 2,3,3,3-tetrafluoropropene, chlorotrifluoropropenes, especially 2-chloro-3,3,3-trifluoropropene, 1-chloro-2-fluoroethylene, trifluoropropenes, especially 3,3,3-trifluoropropene, pentafluoropropenes, especially 1,1,3,3,3-pentafluoropropene or 1,2,3,3,3-pentafluoropropene, 1-chloro-2,2-difluoroethylene, 1-bromo-2,2-difluoroethylene, bromotrifluoroethylene, fluoroethylene, tetrafluoroethylene and hexafluoropropene.

9. Method according to one of Claims 1 to 7, wherein the third monomer is a perfluoroalkyl vinyl ether such as PPVE (perfluoropropyl vinyl ether) and PMVE (perfluoromethyl vinyl ether).

10. Method according to one of Claims 1 to 7, wherein the third monomer is chosen from chlorotrifluoroethylene and 1,1-chlorofluoroethylene, and is preferably chlorotrifluoroethylene.

11. Method according to one of Claims 1 to 10, wherein the relative molar proportions of the monomers injected into the reactor are:
- from 50 to 80% of vinylidene fluoride, preferably from 60 to 70%;
- from 15 to 40% of trifluoroethylene, preferably from 25 to 35%; and
- from 1 to 15% of third monomer, preferably from 2 to 10%.

12. Polymer able to be obtained according to the method of one of Claims 1 to 11, said polymer having a melting point of greater than or equal to 145°C.

13. Film comprising the polymer able to be obtained according to the method of one of Claims 1 to 11, said polymer having a melting point of greater than or equal to 145°C, said film having a thickness of from 1 to 5 µm and a dielectric constant of less than 40, preferably less than 30, advantageously less than 20, at 1 kHz and 25°C.
